# EUROPÄISCHE PATENTSCHRIFT

(11) **EP 2 665 162 B1**
(45) Veröffentlichungstag und Bekanntmachung des Hinweises auf die Patenterteilung: **25.09.2019**
(21) Anmeldenummer: 13163506.2
(22) Anmeldetag: 12.04.2013
(51) Int. Cl.: H02K 11/02, H02K 11/026, H02K 11/40, H02K 5/22, H02K 11/33

(54) **Gleichstrommotor zum Antrieb von Aggregaten eines Kraftfahrzeugs**
DC motor for driving units of a motor vehicle
Moteur à courant continu pour l'entraînement d'agrégats d'un véhicule automobile

(30) Priorität: 16.05.2012 DE 102012104259
(43) Veröffentlichungstag der Anmeldung: 20.11.2013
(73) Patentinhaber: Pierburg GmbH, 41460 Neuss (DE)
(72) Erfinder: Bürger, Frank, 52379 Langerwehe (DE); Schmitt, Helmut, 47877 Willich (DE); Höwiske, Martin, 45699 Herten (DE); Oellrich, Detlev, 13349 Berlin (DE); Münich, Marc-Anton, 14476 Potsdam (DE)
(74) Vertreter: Patentanwälte ter Smitten Eberlein-Van Hoof Rütten Partnerschaftsgesellschaft mbB

(56) Entgegenhaltungen:
- WO-A1-2007/141249
- DE-A1- 10 318 734
- DE-A1-102005 055 740
- DE-A1-102006 044 304
- DE-A1-102009 010 424
- DE-U1- 20 017 779
- US-A1- 2007 210 672

## Beschreibung

Die Erfindung betrifft einen Gleichstrommotor zum Antrieb von Aggregaten eines Kraftfahrzeugs mit einem Gehäuse, welches einen Stator und einen Rotor des Gleichstrommotors radial umgibt und aus einem elektrisch leitenden Material hergestellt ist, einem Lagerschild, welches den Gleichstrommotor axial begrenzt und aus dem zentral eine Antriebswelle des Gleichstrommotors ragt und aus dem zwei Anschlusskontakte zur Spannungsversorgung des Gleichstrommotors ragen, einer Platine, auf der elektronische Bauteile zur Entstörung angeordnet sind und welche eine zentrale Öffnung aufweist, durch welche die Antriebswelle des Gleichstrommotors ragt und welche zwei Durchstecköffnungen aufweist, durch die die Anschlusskontakte des Gleichstrommotors ragen und Mitteln zur Herstellung einer Masseverbindung der Platine.

Es ist bekannt, dass durch die Verwendung von Gleichstrommotoren unabhängig davon ob es sich um elektronisch oder über Bürstenbrücken kommutierte Gleichstrommotoren handelt, elektromagnetische Störstrahlungen entstehen, die den Betrieb anderer elektronischer Systeme negativ beeinflussen oder beispielsweise den Rundfunkempfang oder Funkverkehr erschweren. Gleichzeitig existiert auch eine Empfindlichkeit des Systems selbst gegen die Störabstrahlung anderer elektronischer Systeme. Daher ist es insbesondere in der Automobilindustrie üblich, die elektromagnetische Verträglichkeit von elektronischen Bauteilen nachweisen zu müssen. Zum Erreichen der Anforderungen werden spezielle Entstörschaltungen verwendet, die üblicherweise aus einer Platine bestehen, auf der Ableitkondensatoren und/oder Entstördrosseln angeordnet werden, die über Leiterbahnen miteinander verbunden sind. Zur Erdung dieser elektronischen Kondensatoren muss ein Massekontakt hergestellt werden.

So wird in der DE 10 2006 044 304 A1 eine Anordnung einer Entstörschaltung vorgeschlagen, bei der zwei Entstördrosseln und drei Ableitkondensatoren verwendet werden, die derart zueinander ausgerichtet werden, dass die elektromagnetischen Feldlinien einer mit einem Anschlusskontakt des Elektromotors verbundenen Drossel senkrecht auf die elektromagnetischen Feldlinien eines mit dem gleichen Motorkontakt verbundenen Ableitkondensators liegen. Die Verbindung zur Masse erfolgt entweder durch Verlöten der entgegengesetzten Enden der elektrischen Leitungen der Kondensatoren mit dem metallischen Gehäuse des Gleichstrommotors oder durch Einklemmen einer an einer gestanzten Verbindungsleitung ausgebildeten Nase zwischen einer Endkappe und dem Lagerschild des Gleichstrommotors.

Des Weiteren wird in der DE 10 2009 010 424 A1 ein Kfz-Aggregat-Elektromotor mit einer Platine offenbart, auf der Drosselspulen und Ableitkondensatoren als Entstörelemente angeordnet sind, wobei die Platine auf der Rückseite eines Kunststoffkörpers angeordnet ist, der als Abschlussplatte dient. Der Massekontakt wird über in dem Kunststoffkörper vergossene Leiterbahnen erzeugt, die mit der Platine verbunden sind und zu Flanschaugen geführt sind, über die mittels Schrauben eine Verbindung mit dem metallischen Gehäuse hergestellt wird.

Entsprechend werden bei den bekannten Gleichstrommotoren zur Herstellung einer Masseverbindung der Entstörbauteile üblicherweise Kunststoffkappen, in denen Leiterbahnen ausgebildet sind oder an denen Leiterbahnen befestigt werden in irgendeiner Weise fest mit dem Motorgehäuse verbunden. Die notwendige Verbindung zwischen den Leiterbahnen und der Platine und gegebenenfalls auch zur Masse wird durch Löten hergestellt. Klemmverbindungen sind in den bekannten Ausführungen nur möglich, wenn das Lagerschild als Massekontakt dienen kann, also elektrisch leitend ausgebildet ist.

Es ist daher Aufgabe der Erfindung, einen Gleichstrommotor zum Antrieb von Aggregaten eines Kraftfahrzeugs zu schaffen, bei dem die Montage und Kontaktierung der Platine mit den Entstörbauteilen möglichst einfach durchführbar ist. Eine Massekontaktierung soll auch bei Verwendung von Lagerschilden aus Kunststoff auf einfache Weise ohne erhöhten Herstellaufwand möglich sein.

Diese Aufgabe wird durch einen Gleichstrommotor mit den Merkmalen des Hauptanspruchs gelöst.

Dadurch, dass die Mittel zur Herstellung der Masseverbindung zumindest ein Element aufweisen, über das die Platine mit den Mitteln zur Herstellung der Masseverbindung elektrisch und mechanisch durch Formschluss verbunden ist, wobei an einer Grundplatte an radial gegenüberliegenden Seiten der Mittel zur Herstellung der Masseverbindung zwei Flanschaugen ausgebildet sind, über die die Mittel zur Herstellung der Masseverbindung an das Gehäuse des Gleichstrommotors geschraubt sind, welches ebenfalls entsprechend ausgebildete Flanschaugen aufweist, wird es möglich die Masseanbindung durch einfaches Aufschieben der Platine herzustellen, so dass zusätzliche Montageschritte oder Verbindungsverfahren wie Löten oder dergleichen entfallen. Durch die Verschraubung wird auf einfache Weise der Kontakt zum Motorgehäuse hergestellt und eine großflächige Ableitung gewährleistet.

Vorzugsweise liegt auf der Grundplatte der Mittel zur Herstellung der Masseverbindung die Platine auf, und erstreckt sich von der Grundplatte aus zumindest eine Federnase, die als Formschluss bildendes Element dient, an einem ersten Ende der Platine, gegen deren Anschlagschenkel die Platine anliegt und von dem aus sich ein Endschenkel erstreckt, der federnd auf einer Leiterbahn der Platine aufliegt. So kann die Platine seitlich unter die Federnase geschoben werden, welche dann einerseits mechanisch den Formschluss zur Befestigung der Platine herstellt und andererseits durch Auflage des Endschenkels auf der Leiterbahn auch der Massekontakt hergestellt werden.

Besonders bevorzugt ist eine Ausführung, bei der als Mittel zur Herstellung der Masseverbindung ein elektrisch leitendes Stanzblech dient, welches auf dem Lagerschild des Gleichstrommotors befestigt ist. Dieses ist einerseits leicht herzustellen und bietet den Vorteil, dass als Lagerschild des Motors ein kostengünstiges Kunststoffteil verwendet werden kann.

In einer alternativen Ausführung dient als Mittel zur Herstellung der Masseverbindung das Lagerschild des Gleichstrommotors, welches aus einem elektrisch leitenden Material hergestellt ist, wodurch ein Montageschritt entfällt.

In einer bevorzugten Ausbildung der Erfindung erstrecken sich zwei Federnasen von der Grundplatte der Mittel zur Herstellung der Masseverbindung, deren Endschenkel federnd auf den Leiterbahnen der Platine aufliegen. So wird einerseits die mechanische Anbindung verstärkt und andererseits die elektrische Erdung über eine größere Fläche sichergestellt.

Vorteilhafterweise ist an den Mitteln zur Masseverbindung zumindest ein Federarm ausgebildet ist, der an einer zu den Federnasen entgegengesetzten Seite auf die Platine geklappt ist. So kann die Platine von entgegengesetzten Seiten durch Formschluss befestigt werden. Der Aufwand zur Herstellung dieser zusätzlichen Verbindung ist sehr gering.

Vorzugsweise ragen die zwei Anschlusskontakte des Gleichstrommotors senkrecht durch die Mittel zur Herstellung einer Masseverbindung und sind zungenförmig ausgebildet, wobei bezüglich der durch die Platine aufgespannten Ebene die Erstreckungsrichtung der Motorkontakte senkrecht zur Erstreckungsrichtung der Anschlagschenkel der Federnasen verläuft. So kann die Platine seitlich in die Motorkontakte und gegen die Federnasen eingeschoben werden, wobei durch das Einschieben sowohl der Kontakt der Platine zu den Motorkontakten als auch zur Masse hergestellt wird.

Hierzu sind die zentrale Öffnung der Platine und die beiden Durchstecköffnungen der Platine an einer gemeinsamen Seite offen ausgebildet und die Durchstecköffnungen weisen Klemmkontakte auf, wobei die beiden Federnasen an dieser offenen Seite der Platine angeordnet sind.

Als elektronische Bauteile zur Entstörung sind vorteilhafterweise auf der Platine zumindest drei Kondensatoren angeordnet, durch welche eine Entstörung des Gleichstrommotors erfolgt.

Ein derartig aufgebauter Gleichstrommotor mit Entstörschaltung ist mit sehr geringem Aufwand durch einfaches Stecken zu montieren. Dabei wird neben der mechanischen Befestigung der Platine gleichzeitig eine zuverlässige Massekontaktierung der Entstörbauteile sichergestellt. Auf ein Löten, Schweißen Clipsen oder Schrauben kann vollständig verzichtet werden, wodurch Herstell- und Materialkosten verringert werden.

Ein Ausführungsbeispiel ist in den Zeichnungen dargestellt und wird nachfolgend beschrieben.

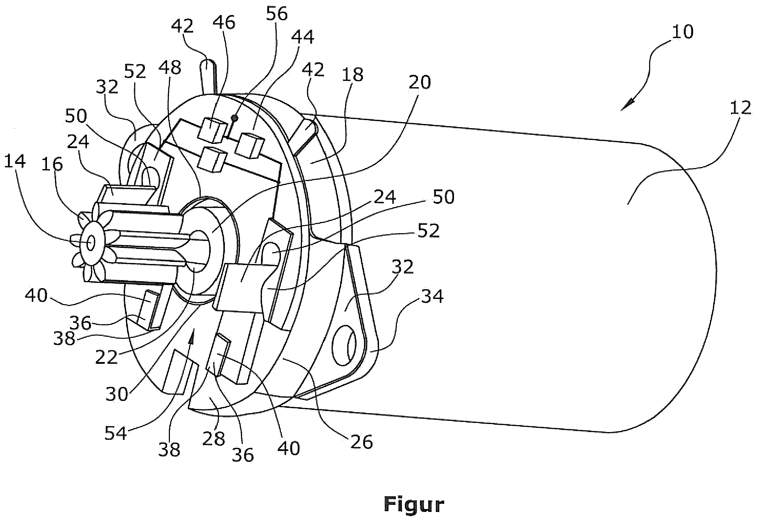

Die Figur zeigt eine Außenansicht eines erfindungsgemäßen Gleichstrommotors in perspektivischer Darstellung.

Die Figur zeigt einen Gleichstrommotor 10 mit einem Gehäuse 12, welches einen nicht sichtbaren Rotor, der auf einer Antriebswelle 14 angeordnet ist und einen ebenfalls nicht sichtbaren Stator in bekannter Weise radial umgibt. Das Gehäuse 12 ist aus einem elektrisch leitenden Material, insbesondere aus Metall.

Das axiale Ende des Gleichstrommotors 10, aus dem die Antriebswelle 14 austritt, auf der ein Antriebsritzel 16 angeordnet ist, ist durch ein Lagerschild 18 verschlossen, welches einen zentralen zylindrischen Vorsprung 20 aufweist, in dessen Innern ein Lager zur Lagerung der Antriebswelle 14 ausgebildet ist und welches eine Öffnung 22 aufweist, durch die die Antriebswelle 14 ragt. Des Weiteren ragen aus dem Lagerschild 18 zwei Anschlusskontakte 24 zur Spannungsversorgung des Gleichstrommotors 10.

Auf dem Lagerschild 18 ist in vorliegendem Ausführungsbeispiel ein Stanzblech 26 aus einem elektrisch leitenden Material flächig aufgebracht, dessen auf dem Lagerschild 18 aufliegende Grundplatte 28 eine zentrale Öffnung 30 aufweist, durch welche der Vorsprung 20 des Lagerschildes 18 ragt, und von der aus sich zwei radial gegenüberliegende Flanschaugen 32 nach radial außen erstrecken, welche auf entsprechend ausgebildeten Flanschaugen 34 des Gehäuse 12 aufliegen, so dass das Stanzblech 26 über nichtdargestellte Schrauben elektrisch leitend mit dem Gehäuse 12 verbunden werden kann.

Des Weiteren erstrecken sich von der Grundplatte 28 erfindungsgemäß zwei Federnasen 36, die aus einem sich axial erstreckenden Anschlagschenkel 38 und einem sich parallel zur Oberfläche der Grundplatte 28 erstreckenden Endschenkel 40 bestehen. Diese Federnasen 36 werden aus der Fläche der Grundplatte 28 gestanzt und durch Biegen in die beschriebene Form gebracht. Zusätzlich erstrecken sich von der Grundplatte 28 an der zu den Federnasen 36 gegenüberliegenden Seite zwei Federarme 42 radial nach außen.

Sowohl die Federarme 42 als auch die Federnasen 36 dienen zur Befestigung einer Platine 44, auf der elektronische Bauteile zur Entstörung, insbesondere drei Ableitkondensatoren 46, angeordnet sind, wobei die Platine 44 auf der Grundplatte 28 des Stanzblechs 26 aufliegt.

Die Platine 44 weist eine zentrale Öffnung 48 auf, durch welche der Vorsprung 20 des Lagerschildes 18 ragt und zwei schlitzförmige Durchstecköffnungen 50 auf, welche von Klemmkontakten 52 umgeben sind, die im zusammengebauten Zustand von beiden Seiten gegen die Auflageflächen der zungenförmigen Anschlusskontakte 24 des Gleichstrommotors 10 anliegen, wodurch eine elektrische Kontaktierung der Platine 44 mit den Anschlusskontakten 24 hergestellt wird.

Sowohl die Durchstecköffnungen 50 beziehungsweise die Klemmkontakte 52 als auch die zentrale Öffnung 48 weisen eine offene Seite 54 auf, deren Öffnung in Richtung der Federnasen 36 gerichtet ist, die zu den Anschlusskontakten 24 des Gleichstrommotors 10 so angeordnet sind, dass die Erstreckungsrichtung der Anschlagschenkel 38 in der durch die Platine 44 aufgespannten Ebene zur Erstreckungsrichtung der Anschlusskontakte 24 senkrecht steht.

Aufgrund dieser Ausrichtung der Bauteile zueinander kann die Platine 44 mit ihrer offenen Seite 54 voran in Erstreckungsrichtung der Anschlusskontakte 24 von der Seite der Federarme 42 aus auf das Stanzblech 26 und gegen die Anschlagschenkel 38 der Federnasen 36 geschoben werden, wodurch gleichzeitig der elektrische Kontakt zwischen den Anschlusskontakten 24 und den Klemmkontakten 52 hergestellt wird.

Durch dieses Aufschieben wird jedoch auch die Platine 44 unter die Endschenkel 40 der Federnasen 36 geschoben. Da die Länge der Anschlagschenkel 38 der Höhe der Platine 44 entspricht liegen die Endschenkel 40 auf der Platine 44 auf, aus der an dieser Position die Enden von Leiterbahnen 56 ragen, auf denen die Federnasen 36 entsprechend elektrisch kontaktierend aufliegen. Um diesen Kontakt noch zu verbessern, können die Endschenkel 40 vor der Montage einen Winkel von kleiner als 90° zu den Anschlagschenkeln 38 einschließen, was dazu führt, dass die Endschenkel 40 bei der Montage kurzzeitig nach oben gebogen werden müssen und anschließend eine Federkraft erzeugend fest gegen die Leiterbahnen 56 anliegen.

Daraus folgt, dass durch das Aufschieben der Platine 44 auf das Stanzblech 26 einerseits ein elektrischer Kontakt zwischen der Platine 44 und dem Stanzblech 26 und somit auch über die Flanschaugen 32, 34 mit dem Gehäuse 12, welches als Masse dient, hergestellt und andererseits eine formschlüssige Verbindung zwischen der Platine 44 und dem Stanzblech 26 hergestellt, welche dadurch vollendet wird, dass die Federarme 42 von der entgegengesetzten Seite umgeklappt werden, so dass diese auf der Platine 44 aufliegen.

Somit dient das Stanzblech 26 als Mittel zur Herstellung einer Masseverbindung während die Federnasen 36 als Element zur Bildung des Formschlusses und zur elektrischen Kontaktierung dienen. Die Masseverbindung kann somit durch einfaches Aufschieben der Platine 44 auf das Stanzblech 26 hergestellt werden, ohne dabei zusätzliche Bauteile verwenden zu müssen. So kann eine gute Entstörung des Gleichstrommotors und entsprechend eine hohe elektromagnetische Verträglichkeit dessen sichergestellt werden, wobei entsprechende Verschaltungen der Platine mit den Entstörbauteilen dem Fachmann bekannt sind. Auch zusätzliche Montageschritte, in denen geschraubt, geschweißt oder gelötet werden muss, entfallen, was auch die mechanische oder thermische Belastung bei der Montage herabsetzt.

Es sollte deutlich sein, dass der Schutzbereich nicht auf das beschriebene Ausführungsbeispiel begrenzt ist. Konstruktive Änderungen des Blechdesigns oder die Verwendung weiterer Bauteile zur Entstörung, wie beispielsweise Entstördrosseln sind selbstverständlich denkbar. Auch können die elektrische Kontaktierung und der Formschluss direkt durch ein entsprechend ausgebildetes elektrisch leitendes Lagerblech erfolgen, ohne den Schutzbereich der Ansprüche zu verlassen.

## Patentansprüche

1. Gleichstrommotor (10) zum Antrieb von Aggregaten eines Kraftfahrzeugs mit
einem Gehäuse (12), welches einen Stator und einen Rotor des Gleichstrommotors (10) radial umgibt und aus einem elektrisch leitenden Material hergestellt ist,
einem Lagerschild (18), welches den Gleichstrommotor (10) axial begrenzt und aus dem zentral eine Antriebswelle (14) des Gleichstrommotors (10) ragt und aus dem zwei Anschlusskontakte (24) zur Spannungsversorgung des Gleichstrommotors (10) ragen, einer Platine (44), auf der elektronische Bauteile (46) zur Entstörung angeordnet sind und welche eine zentrale Öffnung (48) aufweist, durch welche die Antriebswelle (14) des Gleichstrommotors (10) ragt und welche zwei Durchstecköffnungen (50) aufweist, durch die die Anschlusskontakte (24) des Gleichstrommotors (10) ragen und Mitteln (26) zur Herstellung einer Masseverbindung der Platine (44), **dadurch gekennzeichnet, dass**
die Mittel (26) zur Herstellung der Masseverbindung zumindest ein Element (36) aufweisen, über das die Platine (44) mit den Mitteln (26) zur Herstellung der Masseverbindung elektrisch und mechanisch durch Formschluss verbunden ist, wobei an einer Grundplatte (28) an radial gegenüberliegenden Seiten der Mittel (26) zur Herstellung der Masseverbindung zwei Flanschaugen (32) ausgebildet sind, über die die Mittel (26) zur Herstellung der Masseverbindung an das Gehäuse (12) des Gleichstrommotors (10) geschraubt sind, welches ebenfalls entsprechend ausgebildete Flanschaugen (34) aufweist.

2. Gleichstrommotor zum Antrieb von Aggregaten eines Kraftfahrzeugs nach Anspruch 1,
**dadurch gekennzeichnet, dass**
auf der Grundplatte (28) der Mittel (26) zur Herstellung der Masseverbindung die Platine (44) aufliegt, und sich von der Grundplatte (28) aus zumindest eine Federnase (36), die als Formschluss bildendes Element dient, an einem ersten Ende der Platine (44) erstreckt, gegen deren Anschlagschenkel (38) die Platine (44) anliegt und von dem aus sich ein Endschenkel (40) erstreckt, der federnd auf einer Leiterbahn (56) der Platine (44) aufliegt.

3. Gleichstrommotor zum Antrieb von Aggregaten eines Kraftfahrzeugs nach einem der Ansprüche 1 oder 2,
**dadurch gekennzeichnet, dass**
als Mittel zur Herstellung der Masseverbindung ein elektrisch leitendes Stanzblech (36) dient, welches auf dem Lagerschild (18) des Gleichstrommotors (10) befestigt ist.

4. Gleichstrommotor zum Antrieb von Aggregaten eines Kraftfahrzeugs nach einem der Ansprüche 1 bis 2,
**dadurch gekennzeichnet, dass**
als Mittel zur Herstellung der Masseverbindung das Lagerschild (18) des Gleichstrommotors (10) dient, welches aus einem elektrisch leitenden Material hergestellt ist.

5. Gleichstrommotor zum Antrieb von Aggregaten eines Kraftfahrzeugs nach einem der vorhergehenden Ansprüche,
**dadurch gekennzeichnet, dass**
sich zwei Federnasen (36) von der Grundplatte der Mittel (26) zur Herstellung der Masseverbindung erstrecken, deren Endschenkel (40) federnd auf den Leiterbahnen (56) der Platine (44) aufliegen.

6. Gleichstrommotor zum Antrieb von Aggregaten eines Kraftfahrzeugs nach einem der vorhergehenden Ansprüche,
**dadurch gekennzeichnet, dass**
an den Mitteln (26) zur Herstellung der Masseverbindung zumindest ein Federarm (42) ausgebildet ist, der an einer zu den Federnasen entgegengesetzten Seite auf die Platine geklappt ist.

7. Gleichstrommotor zum Antrieb von Aggregaten eines Kraftfahrzeugs nach einem der Ansprüche 2 bis 6,
**dadurch gekennzeichnet, dass**
die zentrale Öffnung (48) der Platine (44) und die beiden Durchstecköffnungen (50) der Platine (44) an einer gemeinsamen Seite (54) offen ausgebildet sind und die Durchstecköffnungen (50) Klemmkontakte (52) aufweisen, wobei die beiden Federnasen (36) an dieser offenen Seite (54) der Platine (44) angeordnet sind.

8. Gleichstrommotor zum Antrieb von Aggregaten eines Kraftfahrzeugs nach einem der Ansprüche 5 bis 7,
**dadurch gekennzeichnet, dass**
die zentrale Öffnung (48) der Platine (44) und die beiden Durchstecköffnungen (50) der Platine (44) an einer gemeinsamen Seite (54) offen ausgebildet sind und die Durchstecköffnungen (50) Klemmkontakte (52) aufweisen, wobei die beiden Federnasen (36) an dieser offenen Seite (54) der Platine (44) angeordnet sind.

9. Gleichstrommotor zum Antrieb von Aggregaten eines Kraftfahrzeugs nach einem der vorhergehenden Ansprüche,
**dadurch gekennzeichnet, dass**
als elektronische Bauteile zur Entstörung auf der Platine (44) zumindest drei Kondensatoren (46) angeordnet sind.

## Claims

1. DC motor (10) for driving units of a motor vehicle, comprising
a housing (12) radially surrounding a stator and a rotor of the DC motor (10) and being made of an electrically conductive material,
a bearing plate (18) which axially limits the DC motor (10) and from which a drive shaft (14) of the DC motor (10) protrudes centrally, and from which two terminals (24) protrude for voltage supply to the DC motor (10),
a circuit board (44) on which electronic components (46) are arranged for interference suppression and which has a central opening (48) through which the drive shaft (14) of the DC motor (10) protrudes and which has two passage openings (50) through which the terminals (24) of the DC motor (10) protrude and
means (26) for establishing ground connection of the circuit board (44),
**characterized in that**
the means (26) for establishing ground connection comprise at least one element (36), via which the circuit board (44) is electrically and mechanically connected by form fit to the means (26) for establishing ground connection, wherein a base plate (28) is formed with two lugs (32) on radially opposite sides of the means (26) for establishing ground connection, via which the means (26) for establishing ground connection are screwed to the housing (12) of the DC motor (10) which also has correspondingly designed lugs (34).

2. DC motor for driving units of a motor vehicle according to claim 1, **characterized in that** the circuit board (44) rests on the base plate (28) of the means (26) for establishing ground connection, and at least one spring nose (36), which serves as an element for form-fit, protrudes form the base plate (28) at a first end of the circuit board (44), against the abutment leg (38) of which the circuit board (44) abuts and from which an end leg (40) extends which resiliently rests on a conductor path (56) of the circuit board (44).

3. DC motor for driving units of a motor vehicle according to one of claims 1 or 2, **characterized in that** an electrically conductive punched plate (36) is used as the means for establishing ground connection, which is fastened on the bearing plate (18) of the DC motor.

4. DC motor for driving units of a motor vehicle according to one of claims 1 to 2, **characterized in that** the bearing plate (18) of the DC motor (10) serve as the means for establishing ground connection, which plate is made of an electrically conductive material.

5. DC motor for driving units of a motor vehicle according to of one of the preceding claims, **characterized in that** two spring noses (36) extend from the base plate of the means (26) for establishing ground connection, whose end legs (40) resiliently rest on the conductor paths (56) of the circuit board (44).

6. DC motor for driving units of a motor vehicle according to one of the preceding claims, **characterized in that** at least one spring arm (42) is formed on the means (26) for establishing ground connection, which arm is folded onto the circuit board on a side opposite to the spring noses.

7. DC motor for driving units of a motor vehicle according to one of claims 2 to 6, **characterized in that** the central opening (48) of the circuit board (44) and the two passage openings (50) of the circuit board (44) are formed to be open on a common side (54) and the passage openings (50) comprise clamping contacts (52), wherein the two spring noses (36) are arranged on that open side (54) of the circuit board (44)

8. DC motor for driving units of a motor vehicle according to one of claims 5 to 7, **characterized in that** the central opening (48) of the circuit board (44) and the two passage openings (50) of the circuit board (44) are formed to be open on a common side (54) and the passage openings (50) comprise clamping contacts (52), wherein the two spring noses (36) are arranged on that open side (54) of the circuit board (44).

9. DC motor for driving units of a motor vehicle according to one of the preceding claims, **characterized in that** at least three capacitors (46) are arranged on the circuit board (44) as electronic components for interference suppression.

## Revendications

1. Moteur à courant continu (10) destiné à entraîner des unités de véhicules automobiles. comprenant
un boitier (12) qui entoure radialement un stator et un rotor du moteur à courant continu (10) et qui est formé d'un matériau électriquement conducteur,
un flasque de palier (18) axialement délimitant le moteur à courant continu (10) et à partir duquel s'étend centralement un arbre d'entraînement (14) du moteur à courant continu (10) et à partir duquel saillent deux bornes (24) d'alimentation en tension du moteur à courant continu (10),
un circuit imprimé (44), sur lequel sont disposés des composants électroniques (46) pour la suppression d'interférences et qui comporte une ouverture centrale (48) à travers laquelle fait saillie l'arbre d'entraînement (14) du moteur à courant continu (10) et qui comporte deux ouvertures de passage (50) à travers lesquelles font saillie les bornes de connexion (24) du moteur à courant continu (10), et
des moyens (26) pour établir une connexion à la masse du circuit (44),
**caractérisé en ce que**
les moyens (26) pour établir la connexion à la masse comprennent au moins un élément (36) par lequel le circuit imprimé (44) est connecté électriquement et mécaniquement, par complémentarité de forme, aux moyens (26) pour établir la connexion à la masse, dans lequel une plaque de base (28) est formée avec deux oeillets de bride (32) sur les côtés radialement opposés du moyen (26) pour établir la connexion à la masse, par lesquels les moyens pour établir la connexion à la masse sont vissés au boîtier (12) du moteur à courant continu (10) sont vissés, lequel boitier également comporte des oeillets de bride (34) correspondants.

2. Moteur à courant continu pour entraîner des unités de véhicules automobiles selon la revendication 1, **caractérisé en ce que** le circuit imprimé (44) repose sur la plaque de base (28) des moyens (26) pour établir la connexion à la masse et qu'au moins un nez de ressort (36), qui sert d'élément de complémentarité de forme, s'étend à partir de la plaque de base (28) à la première extrémité du circuit imprimé (44), contre la jambe de butée (38) du nez repose le circuit imprimé (44) et à partir de laquelle s'étend une jambe d'extrémité (40) qui repose élastiquement sur une piste conductrice (56) du circuit imprimé (44).

3. Moteur à courant continu pour entraîner des unités de véhicules automobiles selon l'une des revendications 1 ou 2, **caractérisé en ce qu'**une tôle estampée électriquement conductrice (36) est utilisée comme moyen pour établir la connexion à la masse, la tôle étant fixée sur la flasque de palier (18) du moteur à courant continu (10).

4. Moteur à courant continu pour entraîner des unités de véhicules automobiles selon l'une des revendications 1 à 2, **caractérisé en ce que** la flasque de palier (18) du moteur à courant continu (10) est utilisée comme moyen pour établir la connexion à la masse, la flasque étant formée d'un matériau conducteur électrique.

5. Moteur à courant continu pour entraîner des unités de véhicules automobiles selon l'une quelconque des revendications précédentes, **caractérisé en ce que** deux nez de ressort (36) s'étendent à partir de la plaque de base des moyens (26) pour réaliser la connexion à la masse, dont les branches d'extrémité (40) reposent élastiquement sur les pistes conductrices (56) du circuit imprimé (44).

6. Moteur à courant continu pour entraîner des unités de véhicules automobiles selon l'une quelconque des revendications précédentes, **caractérisé en ce qu'**au moins un bras à ressort (42) est formé sur le moyen (26) pour établir la connexion à la masse, lequel bras étant plié sur le circuit imprimé à un côté opposé au côté du nez eu ressort.

7. Moteur à courant continu pour entraîner des unités de véhicules automobiles selon l'une des revendications 2 à 6, **caractérisé en ce que** l'ouverture centrale (48) du circuit imprimé (44) et les deux ouvertures de passage (50) du circuit imprimé (44) sont ouvertes sur une face commune (54) et les ouvertures de passage (50) comportent des bornes de serrage (52), les deux nez de ressort (36) étant disposés sur ce côté ouvert (54) du circuit imprimé (44).

8. Moteur à courant continu pour entraîner des unités de véhicules automobiles selon l'une des revendications 5 à 7, **caractérisé en ce que** l'ouverture centrale (48) du circuit imprimé (44) et les deux ouvertures de passage (50) du circuit imprimé (44) sont ouvertes sur une face commune (54) et les ouvertures de passage (50) comportent des bornes de serrage (52), les deux nez de ressort (36) étant disposés sur ce côté ouvert (54) du circuit imprimé (44).

9. Moteur à courant continu pour entraîner des unités de véhicules automobiles selon l'une quelconque des revendications précédentes, **caractérisé en ce qu'**au moins trois condensateurs (46) sont disposés en tant que composants électroniques sur le circuit imprimé (44) destinés à la suppression des interférences.
